# EUROPÄISCHE PATENTSCHRIFT

(11) **EP 4 073 389 B1**
(45) Veröffentlichungstag und Bekanntmachung des Hinweises auf die Patenterteilung: **28.01.2026**
(21) Anmeldenummer: 20816943.3
(22) Anmeldetag: 30.11.2020
(51) Int. Cl.: F04D 29/28, F04D 25/08, H02K 1/32, H02K 9/08

(54) **LÜFTERRAD FÜR EINEN ROTOR UND ELEKTRISCHE MASCHINE**
IMPELLER WHEEL FOR A ROTOR, AND ELECTRIC MACHINE
ROUE À AUBES POUR ROTOR, ET MACHINE ÉLECTRIQUE

(30) Priorität: 13.12.2019 DE 102019219554
(43) Veröffentlichungstag der Anmeldung: 19.10.2022
(73) Patentinhaber: Schaeffler Technologies AG & Co. KG, 91074 Herzogenaurach (DE)
(72) Erfinder: WEISS, Johannes, 81737 München (DE)
(74) Vertreter: Schaeffler Technologies
(86) Internationale Anmeldenummer: PCT/EP2020/083823
(87) Internationale Veröffentlichungsnummer: WO 2021/115806

(56) Entgegenhaltungen:
- DE-A1- 102004 047 735
- DE-A1- 102008 048 433
- DE-A1- 4 242 132
- DE-T5- 112016 002 636
- US-A1- 2005 134 126

## Beschreibung

Die Erfindung betrifft ein Lüfterrad für einen Rotor einer elektrischen Maschine, wobei das Lüfterrad derart eingerichtet und/oder ausgebildet ist, dass der Rotor mit einem Kühlmedium gegenläufig durchströmbar ist, und die Wickelköpfe eines den Rotor umgebenden Stators wirksam gekühlt werden können. Zudem betrifft die Erfindung eine elektrische Maschine für ein Kraftfahrzeug mit einem Rotor und dem erfindungsgemäßen Lüfterrad.

Elektrische Maschinen für ein Kraftfahrzeug sind grundsätzlich bekannt. Derartige bekannte elektrische Maschinen weisen in der Regel einen Rotor auf, an dessen jeweiliger Stirnseite ein Lüfterrad angeordnet ist. Bekannt ist weiterhin, dass der Rotor gegenläufig mit einem Kühlmedium durchströmbar ist. Eine derartige technische Lehre ist beispielsweise aus der EP 2 002 526 B1 bekannt.

Es ist ein Bestreben, die Kühlwirkung der elektrischen Maschine, insbesondere der Wickelköpfe des den Rotor in Umfangsrichtung umgebenden Stators zu erhöhen. Auf diese Weise kann die Leistungsfähigkeit der elektrischen Maschine erhöht werden.

DE 11 2016 002 636 T5 zeigt ein Lüfterrad gemäß dem Oberbegriff des Patentanspruchs 1.

Die DE 42 42 132 A1 und die DE 10 2004 047 735 A1 beschreiben jeweils eine geschlossene elektrische Maschine.

Es ist die Aufgabe der Erfindung, ein Lüfterrad für eine elektrische Maschine bereitzustellen, mit dem die Kühlwirkung der elektrischen Maschine, insbesondere die Kühlwirkung an dem Wickelkopf des den Rotor in Umfangsrichtung umgebenden Stators, erhöhte werden kann.

Diese Aufgabe wird gelöst durch den Gegenstand des unabhängigen Patentanspruchs. Bevorzugte Weiterbildungen der Erfindungen ergeben sich aus den abhängigen Ansprüchen, der Beschreibung und den Figuren, wobei jedes Merkmal sowohl einzeln als auch in Kombination einen Aspekt der Erfindung darstellen kann.

Erfindungsgemäß ist ein Lüfterrad für eine elektrische Maschine eines Kraftfahrzeugs vorgesehen, mit einem ringförmig ausgebildeten Grundkörper, der wenigstens eine Ansaugöffnung und einen Luftumlenkbereich aufweist, der in Umfangsrichtung des Grundkörpers neben der Ansaugöffnung ausgebildet ist, wobei der ringförmig ausgebildete Grundkörper eine erste Seite und eine in axialer Richtung des Grundkörpers beabstandet ausgebildete zweite Seite aufweist, auf der ersten Seite eine Mehrzahl in Umfangsrichtung des Grundkörpers zueinander beabstandet angeordnete erste Lüfterradschaufeln angeordnet sind, auf der zweiten Seite eine Mehrzahl in Umfangsrichtung des Grundkörpers zueinander beabstandet angeordnete zweite Lüfterradschaufeln angeordnet sind, wobei auf der zweiten Seite ein zweiter innerer Abschnitt, ein zweiter äußerer Abschnitt und ein zwischen dem zweiten inneren Abschnitt und dem zweiten äußeren Abschnitt angeordneter zweiter mittlerer Abschnitt ausgebildet ist, der jeweilige Abschnitt in Umfangsrichtung umlaufend ausgebildet ist, die zweiten Lüfterradschaufeln im zweiten äußeren Abschnitt angeordnet sind, und die Ansaugöffnung im zweiten inneren Abschnitt ausgebildet ist.

Mit anderen Worten ist es ein Aspekt der Erfindung, dass ein Lüfterrad für einen Rotor einer elektrischen Maschine bereitgestellt wird, der einen ringförmig ausgebildeten Grundkörper aufweist. Der Grundkörper weist eine erste Seite und eine in axialer Richtung des Grundkörpers beabstandet ausgebildete zweite Seite auf. Zudem ist im Grundkörper wenigstens eine Ansaugöffnung ausgebildet, die sich zwischen der ersten Seite und der zweiten Seite erstreckt, so dass durch die Ansaugöffnung ein Volumenstrom eines Kühlmediums geführt werden kann. Üblicherweise weist der Grundkörper eine Mehrzahl von Ansaugöffnungen auf, vorzugsweise ist die Anzahl der Ansaugöffnungen eine gerade Anzahl.

Angrenzend an die Ansaugöffnung oder an eine Umrandung der Ansaugöffnung ist ein Luftumlenkbereich auf der ersten Seite des Grundkörpers ausgebildet. Der Luftumlenkbereich grenzt somit in Umfangsrichtung des Grundkörpers an die Ansaugöffnung bzw. an eine Umrandung der Ansaugöffnung an. Der Luftumlenkbereich ist dazu eingerichtet und/oder ausgebildet einem Volumenstrom eine Richtungsänderung zu geben. Vorzugsweise weist der Luftumlenkbereich eine rampenförmige und/oder bogenförmige Ausgestaltung auf, so dass ein Volumenstrom aus einer axialen Richtung, bezogen auf die Längsrichtung des Grundkörpers, in radialer Richtung des Grundkörpers umgelenkt werden kann. Auf diese Weise kann der Volumenstrom und/oder Luftstrom vorzugsweise gezielt gegen Wickelköpfe eines Stators gerichtet werden, um diese zu kühlen.

Auf der ersten Seite des Grundkörpers weist das Lüfterrad erste Lüfterradschaufeln auf. Zudem weist der Grundkörper auf der zweiten Seite des Grundkörpers zweite Lüfterradschaufeln auf. Über die beidseitig auf dem Lüfterrad angeordneten Lüfterradschaufeln kann der gegen die Wickelköpfe eines Stators projizierte Luftstrom konzentriert bzw. effektiv ausgenutzt werden, um die Kühlwirkung zu erhöhen.

Erfindungsgemäß ist vorgesehen, dass auf der zweiten Seite ein zweiter innerer Abschnitt, ein zweiter äußerer Abschnitt und ein zwischen dem zweiten inneren Abschnitt und dem zweiten äußeren Abschnitt angeordneter zweiter mittlerer Abschnitt ausgebildet ist, wobei der jeweilige Abschnitt in Umfangsrichtung umlaufend ausgebildet ist, die zweiten Lüfterradschaufeln im zweiten äußeren Abschnitt angeordnet sind, und die Ansaugöffnung im zweiten inneren Abschnitt ausgebildet ist. Somit sind die zweiten Lüfterradschaufeln bezogen auf die radiale Richtung des Grundkörpers im äußeren Bereich angeordnet, um einen Volumenstrom und/oder Luftstrom gezielt auf einen Wickelkopf eines Stators richten zu können.

Eine vorteilhafte Weiterbildung der Erfindung liegt darin, dass der Grundkörper auf der ersten Seite einen ersten inneren Abschnitt, einen ersten äußeren Abschnitt und einen zwischen dem ersten inneren Abschnitt und dem ersten äußeren Abschnitt angeordneten ersten mittleren Abschnitt aufweist, der jeweilige Abschnitt in Umfangsrichtung umlaufend ausgebildet ist, die ersten Lüfterradschaufeln im ersten äußeren Abschnitt angeordnet sind, und die Ansaugöffnung und der Luftumlenkbereich im ersten inneren Abschnitt ausgebildet sind. Mit anderen Worten weist der Grundkörper bezogen auf dessen radiale Richtung auf der ersten Seite drei Abschnitte auf. Einen ersten inneren Abschnitt mit der Ansaugöffnung und dem Luftumlenkbereich, einen ersten äußeren Abschnitt mit den ersten Lüfterradschaufeln und einen ersten mittleren Abschnitt, in dem weder Ansaugöffnung noch Lüfterradschaufeln angeordnet sind. Demnach sind die ersten Lüfterradschaufeln bezogen auf die radiale Richtung des Grundkörpers im äußeren Bereich angeordnet, um einen Volumenstrom und/oder Luftstrom gezielt auf einen Wickelkopf eines Stators richten zu können.

**In** diesem Zusammenhang sieht eine vorteilhafte Weiterbildung der Erfindung vor, dass der zweite mittlere Abschnitt gegenüber dem zweiten äußeren Abschnitt in axialer Richtung des Grundkörpers zurückspringend ausgebildet ist. Anders ausgedrückt springt der zweite äußere Abschnitt gegenüber dem mittleren Abschnitt in axialer Richtung des Grundkörpers vor. Auf diesem vorspringenden Abschnitt sind die zweiten Lüfterradschaufeln angeordnet.

Der Übergang zwischen dem zweiten mittleren Abschnitt und dem zweiten äußeren Abschnitt kann stufenförmig oder rampenförmig ausgebildet sein. Ein rampenförmiger Übergang kann strömungstechnische Vorteile haben, um einen Volumenstrom und/oder Luftstrom über den zweiten mittleren Abschnitt und den zweiten äußeren Abschnitt in radialer Richtung des Grundkörpers auszublasen.

Grundsätzlich ist denkbar, dass die ersten Lüfterradschaufeln und die zweiten Lüfterradschaufeln gleich ausgebildet sind. Eine bevorzugte Ausgestaltung der Erfindung liegt darin, dass die ersten Lüfterradschaufeln und/oder die zweiten Lüfterradschaufeln voneinander verschieden ausgebildet sind. Vorzugsweise können die ersten Lüfterradschaufeln derart ausgebildet und/oder angeordnet sein, dass diese einen Volumenstrom und/oder einen Teil des Volumenstroms gezielt ansaugen können, während die zweiten Lüfterradschaufeln einen Volumenstrom und/oder Teil eines Volumenstroms in radialer Richtung des Grundkörpers beschleunigen und/oder umlenken.

Gemäß einer bevorzugten Weiterbildung der Erfindung ist vorgesehen, dass die ersten Lüfterradschaufeln einen gekrümmten und/oder einen bogenförmigen Verlauf aufweisen. Jede erste Lüfterradschaufel weist demnach einen Anfangspunkt und einen Endpunkt auf, wobei der Anfangspunkt und der Endpunkt in radialer Richtung und in Umfangsrichtung zueinander beabstandet sind, und der Verlauf zwischen Anfangspunkt und Endpunkt gekrümmt und/oder bogenförmig ausgebildet ist. Eine derartige Ausgestaltung der Lüfterradschaufeln eignet sich vorzugsweise zum Ansaugen eines Luftstroms und/oder Volumenstroms.

Eine vorteilhafte Ausgestaltung der Erfindung liegt darin, dass die zweiten Lüfterradschaufeln einen in radialer Richtung des Grundkörpers gradlinige Ausgestaltung aufweisen. Auf diese Weise können sie gezielt einen Luftstrom und/oder Volumenstrom in radialer Richtung des Grundkörpers ausblasen und/oder lenken.

Denkbar ist, dass das Lüfterrad mehrteilig ausgebildet ist. Es kann demnach mehrere Segmente umfassen, die zu einem ringförmig ausgebildeten Lüfterrad zusammengesetzt werden.

Eine bevorzugte Ausgestaltung der Erfindung liegt darin, dass das Lüfterrad einstückig ausgebildet ist. Demnach sind die ersten Lüfterradschaufeln und die zweiten Lüfterradschaufeln untrennbar mit dem ringförmig ausgebildeten Grundkörper verbunden. Denkbar ist dabei, dass das Lüfterrad aus lediglich einem Material oder aus einem Verbundmaterial ausgebildet ist. Vorzugsweise ist das Lüfterrad aus einem Metall und/oder aus einem Kunststoff ausgebildet. Denkbar ist auch, dass das Lüfterrad aus einem faserverstärkten Kunststoff ausgebildet sein kann.

In einer vorteilhaften Weiterbildung der Erfindung ist vorgesehen, dass das Lüfterrad eine Mehrzahl von in Umfangsrichtung zueinander beabstandet angeordneter Ansaugöffnungen aufweist, wobei zwischen den Ansaugöffnungen jeweils der Luftumlenkbereich ausgebildet ist. Die Anzahl der Ansaugöffnungen ist vorzugsweise eine gerade Anzahl. Beispielsweise beträgt die Anzahl X der Ansaugöffnungen X = 2, 4, 6 oder 8. Denkbar ist, dass die Anzahl X auch größer als 8 ist.

Die Erfindung betrifft zudem eine elektrische Maschine für ein Kraftfahrzeug, mit einem um eine Rotorachse rotierbaren Rotor, der ein Blechpaket mit einer ersten Stirnseite und einer in axialer Richtung des Rotors beabstandet angeordneten zweiten Stirnseite aufweist, einem ersten Kühlkanal und einem von dem ersten Kühlkanal verschiedenen zweiten Kühlkanal, wobei sich der erste Kühlkanal und der zweite Kühlkanal innerhalb des Blechpakets zwischen der ersten Stirnseite und der zweiten Stirnseite erstrecken, mit zwei erfindungsgemäßen Lüfterrädern, die derart angeordnet und/oder ausgebildet sind, dass der Rotor gegenläufig mit einem Kühlmedium durchströmbar ist.

Mit anderen Worten weist die elektrische Maschine einen Rotor auf. Der Rotor umfasst eine erste Stirnseite und eine in axialer Richtung des Rotors beabstandet angeordnete zweite Stirnseite. Zwischen der ersten Stirnseite und der zweiten Stirnseite erstrecken sich ein erster Kühlkanal und ein von dem ersten Kühlkanal verschiedener zweiter Kühlkanal. Der erste Kühlkanal und der zweite Kühlkanal können parallel zur Längsachse des Rotors verlaufen und die erste Stirnseite mit der zweiten Stirnseite auf kürzestem Wege miteinander verbinden. Denkbar ist jedoch auch, dass der erste Kühlkanal und der zweite Kühlkanal spiralförmig durch den Rotor verlaufen und die erste Stirnseite mit der zweiten Stirnseite verbindet.

Angrenzend und/oder auf die erste Stirnseite aufgesetzt ist ein erstes Lüfterrad angeordnet. Ebenso ist angrenzend und/oder auf die zweite Stirnseite aufgesetzt ein zweites Lüfterrad angeordnet, wobei das erste Lüfterrad und das zweite Lüfterrad derart versetzt zueinander auf der jeweiligen Stirnseite des Rotors angeordnet sind, dass der Rotor gegenläufig mit einem Kühlmedium und/oder einem Volumenstrom durchströmbar ist. Der Kühlmedium ist vorzugsweise Luft.

Eine vorteilhafte Weiterbildung der Erfindung liegt darin, dass die erste Seite des Lüfterrads der ersten Stirnseite des Rotors zugewandt ist, die Ansaugöffnung des ersten Lüfterrads mit dem ersten Kühlkanal fluchtet, der Luftumlenkbereich des ersten Lüfterrads mit dem zweiten Kühlkanal fluchtet, die erste Seite des zweiten Lüfterrads der zweiten Stirnseite des Rotors zugewandt ist, die Ansaugöffnung des zweiten Lüfterrads mit dem zweiten Kühlkanal fluchtet, und der Luftumlenkbereich des zweiten Lüfterrads mit dem ersten Kühlkanal fluchtet. Demnach sind das erste Lüfterrad und das zweite Lüfterrad derart versetzt zueinander angeordnet, dass der Rotor bei einer Rotation um dessen Längsachse gegenläufig mit einem Kühlmedium und/oder einem Volumenstrom durchströmbar ist.

In einer bevorzugten Weiterbildung der Erfindung ist vorgesehen, dass der Rotor in Umfangsrichtung von einem Stator umgeben ist, wobei der Rotor relativ zum Stator um dessen Längsachse rotierbar angeordnet und/oder ausgebildet ist, Rotor und Stator von einem Gehäuse umgeben sind, in dem Gehäuse ein loslagerseitiger Hohlraum und ein festlagerseitiger Hohlraum ausgebildet sind, die durch Rotor und Stator voneinander getrennt sind, der Rotor mit einem Kühlmedium, das zwischen dem loslagerseitigen Hohlraum und dem festlagerseitigen Hohlraum strömt, gegenläufig durchströmbar ist, durch eine Rotation des Rotors um dessen Längsachse im loslagerseitigen Hohlraum ein erster Volumenstrom und im festlagerseitigen Hohlraum ein zweiter Volumenstrom ausgebildet sind,
- ein erster Teil des zweiten Volumenstroms durch die ersten Lüfterradschaufeln des ersten Lüfterrads über die Ansaugöffnung des zweiten Lüfterrads ansaugbar ist, durch den zweiten Kühlkanal führbar ist, und über den Luftumlenkbereich des ersten Lüfterrads in radialer Richtung des Rotors ausblasbar ist, um einen Wickelkopf des den Rotor umgebenden Stators im loslagerseitigen Hohlraum zu kühlen,
- ein zweiter Teil des zweiten Luftstroms über die zweiten Lüfterradschaufeln des zweiten Lüfterrads in radialer Richtung umlenkbar ist, um einen Wickelkopf des Stators im festlagerseitigen Hohlraum zu kühlen,
- ein erster Teil des ersten Volumenstroms durch die ersten Lüfterradschaufeln des zweiten Lüfterrads über die Ansaugöffnung des ersten Lüfterrads ansaugbar ist, durch den ersten Kühlkanal führbar ist, und über den Luftumlenkbereich des zweiten Lüfterrads in radialer Richtung des Rotors ausblasbar ist, um den Wickelkopf des Stators im festlagerseitigen Hohlraum zu kühlen,
- ein zweiter Teil des ersten Volumenstroms über die zweiten Lüfterradschaufeln des ersten Lüfterrads in radialer Richtung umlenkbar ist, um den Wickelkopf des Stators im loslagerseitigen Hohlraum zu kühlen.

Es ist demnach vorgesehen, dass der Wickelkopf des Stators im loslagerseitigen Hohlraum der elektrischen Maschine einerseits über den ersten Teil des ersten Volumenstroms aus dem festlagerseitigen Hohlraum, der über die ersten Lüfterradschaufeln des ersten Lüfterrads angesaugt wird, und andererseits über den zweiten Teil des zweiten Volumenstroms aus dem loslagerseitigen Hohlraum gekühlt wird. Der Wickelkopf des Stators im festlagerseitigen Hohlraum der elektrischen Maschine wird einerseits über den ersten Teil des zweiten Volumenstroms aus dem loslagerseitigen Hohlraum, der über die ersten Lüfterradschaufeln des zweiten Lüfterrads angesaugt wird, und andererseits über den zweiten Teil des ersten Volumenstroms aus dem festlagerseitigen Hohlraum gekühlt. Auf diese Weise können die Volumenströme gezielt gegen die Wickelköpfe des den Rotor in Umfangsrichtung umgebenden Stators gerichtet werden, um diese effektiv zu Kühlung. Auf diese Weise kann die Leistungsfähigkeit der elektrischen Maschine erhöht werden.

Eine bevorzugte Weiterbildung der Erfindung liegt darin, dass das Gehäuse ein flüssigkeitsgekühltes loslagerseitiges Lagerschild und/oder ein flüssigkeitsgekühltes festlagerseitiges Lagerschild aufweist, und der erste Volumenstrom zumindest abschnittsweise an dem loslagerseitigen Lagerschild vorbeiführbar ist, und der zweite Volumenstrom zumindest abschnittsweise an dem festlagerseitigen Lagerschild vorbeiführbar ist. Somit kann der Volumenstrom und/oder Luftstrom effektiv gekühlt werden, bevor dieser erneut umgelenkt wird, um die Wickelköpfe des Stators zu kühlen.

Abschließend liegt eine bevorzugte Weiterbildung der Erfindung darin, dass eine dem Rotor zugewandte Innenseite des loslagerseitigen Lagerschilds und/oder des festlagerseitigen Lagerschilds zumindest abschnittsweise konisch ausgebildet ist, so dass die jeweilige Innenseite in Richtung des Rotors zulaufend ausgebildet ist. Auf diese Weise können der erste Volumenstrom und/oder der zweite Volumenstrom gezielt Richtung Lüfterrad geführt werden.

Weitere Merkmale ergeben sich aus den Unteransprüchen sowie den nachfolgenden Ausführungsbeispielen. Die Ausführungsbeispiele sind nicht als einschränkend, sondern vielmehr als beispielhaft zu verstehen. Sie sollen den Fachmann in die Lage versetzen, die Erfindung auszuführen. Die Anmelderin behält sich vor, einzelne oder mehrere der in den Ausführungsbeispielen offenbarten Merkmale zum Gegenstand von Patentansprüchen zu machen oder solche Merkmale in bestehende Patentansprüche aufzunehmen.

Die Ausführungsbeispiele werden anhand von Figuren näher erläutert. In diesen zeigen:
- Fig. 1: eine Ansicht einer ersten Seite eines Lüfterrads;
- Fig. 2: eine Ansicht einer zweiten Seite eines Lüfterrads;
- Fig. 3: einen Schnitt durch eine elektrische Maschine.

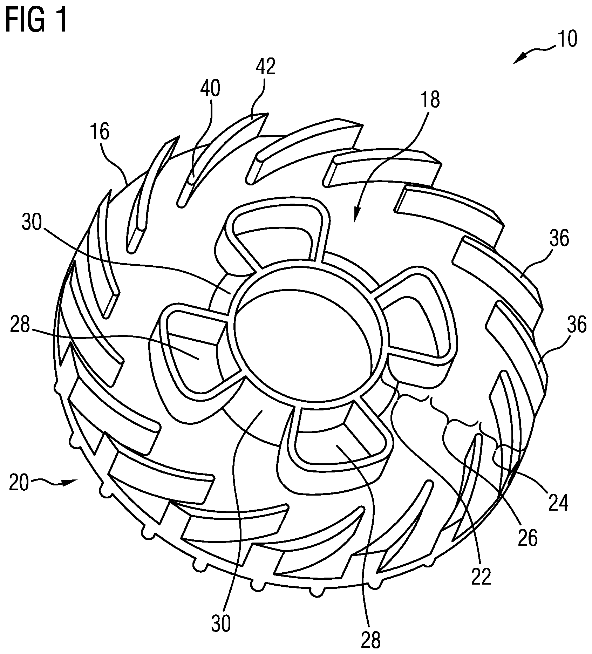

Fig. 1 zeigt ein Lüfterrad 10 für einen Rotor 12 einer elektrischen Maschine 14. Das Lüfterrad 10 weist einen ringförmig ausgebildeten Grundkörper 16 auf. Der Grundkörper 16 umfasst eine erste Seite 18 und eine in axialer Richtung des Grundkörpers 16 zur ersten Seite 18 beabstandet ausgebildete zweite Seite 20.

Die erste Seite 18 weist einen ersten inneren Abschnitt 22, einen ersten äußeren Abschnitt 24 und einen zwischen dem ersten inneren Abschnitt 22 und dem ersten äußeren Abschnitt 24 angeordneten ersten mittleren Abschnitt 26 auf. Der jeweilige Abschnitt 22, 24, 26 ist in Umfangsrichtung umlaufend ausgebildet.

Im ersten inneren Abschnitt 22 der ersten Seite 18 sind eine Mehrzahl von Ansaugöffnungen 28 ausgebildet, die in Umfangsrichtung des Grundkörpers 16 in regelmäßigen Abständen zueinander beabstandet angeordnet sind. Im vorliegenden Ausführungsbeispiel sind vier Ansaugöffnungen 28 vorgesehen. Denkbar ist jedoch, dass die Anzahl der Ansaugöffnungen 28 größer oder kleiner als vier ist. Insbesondere ist die Anzahl der Ansaugöffnungen 28 eine gerade Anzahl. Die Ansaugöffnungen 28 erstrecken sich zwischen der ersten Seite 18 und der zweiten Seite 20 des Grundkörpers 16, so dass durch die Ansaugöffnungen 28 ein Volumenstrom eines Kühlmediums, insbesondere Luft, geführt werden kann.

Zwischen jeweils zwei Ansaugöffnungen 28 ist ein Luftumlenkbereich 30 angeordnet und/oder ausgebildet. Der Luftumlenkbereich 30 ist dazu eingerichtet und/oder ausgebildet einem Volumenstrom und/oder einen Luftstrom eine Richtungsänderung zu geben. Vorliegend weist der Luftumlenkbereich 30 eine rampenförmige und/oder bogenförmige Ausgestaltung auf, so dass ein Volumenstrom aus einer axialen Richtung, bezogen auf die Längsrichtung des Grundkörpers 16, in radialer Richtung des Grundkörpers 16 umgelenkt werden kann. Auf diese Weise kann der Volumenstrom und/oder Luftstrom vorzugsweise gezielt gegen Wickelköpfe 32 eines den Rotor 12 umgebenden Stators 34 gerichtet werden, um diese zu kühlen.

Im ersten äußeren Abschnitt 24 der ersten Seite 18 sind eine Mehrzahl erster Lüfterradschaufeln 36 in Umfangsrichtung zueinander beabstandet angeordnet. Die ersten Lüfterradschaufeln 36 weisen einen gekrümmten und/oder einen bogenförmigen Verlauf auf. Mit anderen Worten weist eine Lüfterradschaufel 36 einen Anfangspunkt 40 und einen Endpunkt 42 auf, wobei der Anfangspunkt 40 und der Endpunkt 42 in radialer Richtung des Grundkörpers 16 und in Umfangsrichtung des Grundkörpers 16 zueinander beabstandet sind, und der Verlauf zwischen Anfangspunkt 40 und Endpunkt 42 gekrümmt und/oder bogenförmig ausgebildet ist. Eine derartige Ausgestaltung der Lüfterradschaufeln 36 eignet sich vorzugsweise, zum Ansaugen eines Luftstroms und/oder eines Volumenstroms.

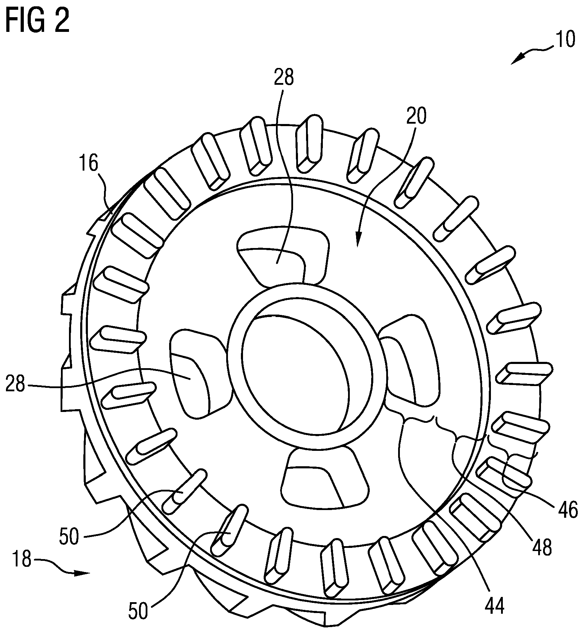

Fig. 2 zeigt die zweite Seite 20 des Lüfterrads 10. Die zweite Seite 20 weist einen zweiten inneren Abschnitt 44, einen zweiten äußeren Abschnitt 46 und einen zwischen dem zweiten inneren Abschnitt 44 und dem zweiten äußeren Abschnitt 46 angeordneten zweiten mittleren Abschnitt 48 auf. Der jeweilige Abschnitt 44, 46, 48 ist in Umfangsrichtung umlaufend ausgebildet.

Im zweiten inneren Abschnitt 44 sind die Ansaugöffnungen 28 ausgebildet, die sich zwischen der ersten Seite 18 und der zweiten Seite 20 erstrecken. Im zweiten äußeren Abschnitt 46 sind eine Mehrzahl zweiter Lüfterradschaufeln 50 angeordnet, die in Umfangsrichtung des Grundkörpers 16 zueinander beabstandet angeordnet sind. Die zweiten Lüfterradschaufeln 50 weisen einen in radialer Richtung des Grundkörpers 16 gradlinige Ausgestaltung auf. Auf diese Weise können sie gezielt einen Luftstrom und/oder Volumenstrom in radialer Richtung des Grundkörpers 16 ausblasen.

Weiterhin ist ersichtlich, dass der zweite mittlere Abschnitt 48 und der zweite innere Abschnitt 44 gegenüber dem zweiten äußeren Abschnitt 46 in axialer Richtung des Grundkörpers 16 zurückspringend ausgebildet ist.

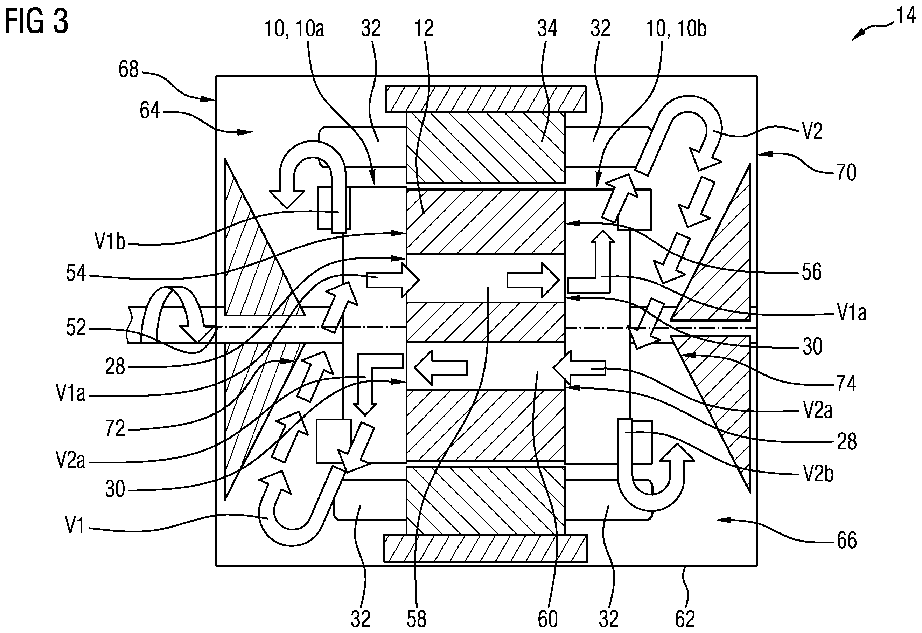

Fig. 3 zeigt einen schematischen Längsschnitt durch die elektrische Maschine 14. Die elektrische Maschine 14 weist den Rotor 12 auf, wobei der Rotor 12 um dessen Längsachse bzw. Rotorachse 52 rotierbar gelagert ist. Der Rotor 12 weist ein Blechpaket mit einer ersten Stirnseite 54 und einer in axialer Richtung des Rotors 12 zur ersten Stirnseite 54 beabstandet angeordneten zweiten Stirnseite 56 auf.

Innerhalb des Blechpakets verlaufen zwischen der ersten Stirnseite 54 und der zweiten Stirnseite 56 eine Mehrzahl erster Kühlkanäle 58 und eine Mehrzahl zweiter Kühlkanäle 60, wobei in dem vorliegenden Schnitt jeweils nur ein erster Kühlkanal 58 und ein zweiter Kühlkanal 60 ersichtlich sind.

Auf der ersten Stirnseite 54 ist ein erstes Lüfterrad 10a angeordnet. Zudem ist auf der zweiten Stirnseite 56 ein zweites Lüfterrad 10b angeordnet. Das erste Lüfterrad 10a und das zweite Lüfterrad 10b weisen eine Ausgestaltung des Lüfterrads 10 auf, wie sie in den Fig. 1 und 2 gezeigt ist. Das erste Lüfterrad 10a und das zweite Lüfterrad 10b ist derart auf dem Rotor 12 angeordnet, dass der Rotor 12 bei einer Rotation des Rotors 12 um dessen Längsachse bzw. Rotorachse 52 gegenläufig mit einem Kühlmedium, insbesondere mit einem Volumenstrom V und/oder Luftstrom, durchströmbar ist.

Insbesondere ist die erste Seite 18 des ersten Lüfterrads 10a der ersten Stirnseite 54 des Rotors 12 zugewandt, wobei die Ansaugöffnung 28 des ersten Lüfterrads 10a mit dem ersten Kühlkanal 58 fluchtet und der Luftumlenkbereich 30 des ersten Lüfterrads 10a mit dem zweiten Kühlkanal 60 fluchtet. Entsprechend versetzt ist das zweite Lüfterrad 10b auf der zweiten Seite 20 angeordnet. Demnach ist die erste Seite 18 des zweiten Lüfterrads 10b der zweiten Stirnseite 56 des Rotors 12 zugewandt, wobei die Ansaugöffnung 28 des zweiten Lüfterrads 10b mit dem zweiten Kühlkanal 60 fluchtet, und der Luftumlenkbereich 30 des zweiten Lüfterrads 10b mit dem ersten Kühlkanal 58 fluchtet. Somit sind das erste Lüfterrad 10a und das zweite Lüfterrad 10b derart versetzt zueinander angeordnet, dass der Rotor 12 bei einer Rotation um dessen Längsachse 52 gegenläufig mit einem Kühlmedium und/oder einem Volumenstrom V durchströmbar ist.

Der Rotor 12 ist in Umfangsrichtung von dem Stator 34 umgeben, wobei der Rotor 12 relativ zum Stator 34 um die Rotorachse 52 rotierbar ausgebildet ist. Der Rotor 12 und Stator 34 sind von einem Gehäuse 62 umgeben. In dem Gehäuse 62 sind ein loslagerseitiger Hohlraum 64 und ein festlagerseitiger Hohlraum 66 ausgebildet, die durch Rotor 12 und Stator 34 voneinander getrennt sind. Der Rotor 12 ist mit einem Kühlmedium, insbesondere mit einem Volumenstrom V bzw. einem Luftstrom, der zwischen dem loslagerseitigen Hohlraum 64 und dem festlagerseitigen Hohlraum 66 strömt, gegenläufig durchströmbar.

Durch eine Rotation des Rotors 12 um dessen Rotorachse 52 wird im loslagerseitigen Hohlraum 64 ein erster Volumenstrom V1 und im festlagerseitigen Hohlraum 66 ein zweiter Volumenstrom V2 ausgebildet. Dabei wird
ein erster Teil V2a des zweiten Volumenstroms V2 durch die ersten Lüfterradschaufeln 36 des ersten Lüfterrads 10a über die Ansaugöffnung 28 des zweiten Lüfterrads 10b angesaugt, durch den zweiten Kühlkanal 60 geführt, und über den Luftumlenkbereich 30 des ersten Lüfterrads 10a in radialer Richtung des Rotors 12 bzw. Grundkörpers 16 ausgeblasen, um den Wickelkopf 32 des den Rotor 12 umgebenden Stators 34 im loslagerseitigen Hohlraum 64 zu kühlen. Ein zweiter Teil V2b des zweiten Luftstroms V2 wird über die zweiten Lüfterradschaufeln 50 des zweiten Lüfterrads 10b in radialer Richtung des Rotors 12 bzw. Grundkörpers 16 umgelenkt, um den Wickelkopf 32 des Stators 34 im festlagerseitigen Hohlraum 66 zu kühlen. Korrespondierend dazu wird ein erster Teil V1a des ersten Volumenstroms V1 durch die ersten Lüfterradschaufeln 36 des zweiten Lüfterrads 10b über die Ansaugöffnung 28 des ersten Lüfterrads 10a angesaugt, durch den ersten Kühlkanal 58 geführt, und über den Luftumlenkbereich 30 des zweiten Lüfterrads 10b in radialer Richtung des Rotors 12 bzw. des Grundkörpers 16 ausgeblasen, um den Wickelkopf 32 des Stators 34 im festlagerseitigen Hohlraum 66 zu kühlen. Ferner wir ein zweiter Teil V1b des ersten Volumenstroms V1 über die zweiten Lüfterradschaufeln 50 des ersten Lüfterrads 10a in radialer Richtung umgelenkt, um den Wickelkopf 32 des Stators 34 im loslagerseitigen Hohlraum 64 zu kühlen.

Durch die beidseitig auf dem Lüfterrad 10 angeordneten Lüfterradschaufeln 36, 50 können eine gezielte und effiziente Kühlung des Wickelkopfes 32 erzielt werden. Auf diese Weise kann die Leistungsfähigkeit der elektrischen Maschine 14 erhöht werden.

Das Gehäuse 62 weist ein flüssigkeitsgekühltes loslagerseitiges Lagerschild 68 und ein flüssigkeitsgekühltes festlagerseitiges Lagerschild 70 auf, wobei der erste Volumenstrom V1 zumindest abschnittsweise an dem loslagerseitigen Lagerschild 68 vorbeigeführt wird, und der zweite Volumenstrom V2 zumindest abschnittsweise an dem festlagerseitigen Lagerschild 70 vorbeigeführt wird. Somit können die Volumenströme V1, V2 effektiv gekühlt werden, bevor diese erneut umgelenkt werden, um die Wickelköpfe 32 des Stators 34 zu kühlen.

Eine dem Rotor 12 zugewandte Innenseite 72 des loslagerseitigen Lagerschilds 68 und eine dem Rotor 12 zugewandte Innenseite 74 des festlagerseitigen Lagerschilds 70 ist zumindest abschnittsweise konisch ausgebildet, so dass die jeweilige Innenseite 72, 74 in Richtung des Rotors 12 zulaufend ausgebildet ist. Auf diese Weise können der erste Volumenstrom V1 und/oder der zweite Volumenstrom V2 gezielt Richtung des jeweiligen Lüfterrads 10 geführt werden.

## Patentansprüche

1. Lüfterrad (10) für eine elektrische Maschine (14) eines Kraftfahrzeugs, mit
einem ringförmig ausgebildeten Grundkörper (16), der wenigstens eine Ansaugöffnung (28) und einen Luftumlenkbereich (30) aufweist, der in Umfangsrichtung des Grundkörpers (16) neben der Ansaugöffnung (28) ausgebildet ist, wobei
der ringförmig ausgebildete Grundkörper (16) eine erste Seite (18) und eine in axialer Richtung des Grundkörpers (16) zur ersten Seite (18) beabstandet ausgebildete zweite Seite (20) aufweist,
auf der ersten Seite (18) eine Mehrzahl in Umfangsrichtung des Grundkörpers (16) zueinander beabstandet angeordnete erste Lüfterradschaufeln (36) angeordnet sind, und
auf der zweiten Seite (20) eine Mehrzahl in Umfangsrichtung des Grundkörpers (16) zueinander beabstandet angeordnete zweite Lüfterradschaufeln (50) angeordnet sind **dadurch gekennzeichnet, dass**
auf der zweiten Seite (20) ein zweiter innerer Abschnitt (44), ein zweiter äußerer Abschnitt (46) und ein zwischen dem zweiten inneren Abschnitt (44) und dem zweiten äußeren Abschnitt (46) angeordneter zweiter mittlerer Abschnitt (48) ausgebildet ist,
der jeweilige Abschnitt (44, 46, 48) in Umfangsrichtung umlaufend ausgebildet ist,
die zweiten Lüfterradschaufeln (50) im zweiten äußeren Abschnitt (46) angeordnet sind, und
die Ansaugöffnung (28) im zweiten inneren Abschnitt (44) ausgebildet ist.

2. Lüfterrad nach Anspruch 1, **dadurch gekennzeichnet, dass** der Grundkörper (16) auf der ersten Seite (18) einen ersten inneren Abschnitt (22), einen ersten äußeren Abschnitt (24) und einen zwischen dem ersten inneren Abschnitt (22) und dem ersten äußeren Abschnitt (24) angeordneten ersten mittleren Abschnitt (26) aufweist,
der jeweilige Abschnitt (22, 24, 26) in Umfangsrichtung umlaufend ausgebildet ist,
die ersten Lüfterradschaufeln (36) im ersten äußeren Abschnitt (24) angeordnet sind, und
die Ansaugöffnung (28) und der Luftumlenkbereich (30) im ersten inneren Abschnitt (22) ausgebildet sind.

3. Lüfterrad nach einem der vorstehenden Ansprüche, **dadurch gekennzeichnet, dass** der zweite mittlere Abschnitt (48) gegenüber dem zweiten äußeren Abschnitt (46) in axialer Richtung des Grundkörpers (16) zurückspringend ausgebildet ist.

4. Lüfterrad nach einem der vorstehenden Ansprüche, **dadurch gekennzeichnet, dass** die ersten Lüfterradschaufeln (36) und/oder die zweiten Lüfterradschaufeln (50) voneinander verschieden ausgebildet sind.

5. Lüfterrad nach einem der vorstehenden Ansprüche, **dadurch gekennzeichnet, dass** die ersten Lüfterradschaufeln (36) einen gekrümmten und/oder einen bogenförmigen Verlauf aufweisen.

6. Lüfterrad nach einem der vorstehenden Ansprüche, **dadurch gekennzeichnet, dass** die zweiten Lüfterradschaufeln (50) einen in radialer Richtung des Grundkörpers (16) gradlinige Ausgestaltung aufweisen.

7. Lüfterrad nach einem der vorstehenden Ansprüche, **dadurch gekennzeichnet, dass** das Lüfterrad (10) einstückig ausgebildet ist.

8. Lüfterrad nach einem der vorstehenden Ansprüche, **dadurch gekennzeichnet, dass** das Lüfterrad (10) aus einem Metall, einem Kunststoff und/oder aus einem faserverstärkten Kunststoff ausgebildet ist.

9. Lüfterrad nach einem der vorstehenden Ansprüche, **dadurch gekennzeichnet, dass** das Lüfterrad (10) eine Mehrzahl von in Umfangsrichtung zueinander beabstandet angeordneten Ansaugöffnungen (28) aufweist, wobei zwischen den Ansaugöffnungen (28) jeweils der Luftumlenkbereich (30) ausgebildet ist.

10. Elektrische Maschine (14) für ein Kraftfahrzeug, mit
einem um eine Rotorachse (52) rotierbaren Rotor (12), der ein Blechpaket mit einer ersten Stirnseite (54) und einer in axialer Richtung des Rotors (12) beabstandet angeordneten zweiten Stirnseite (56) aufweist,
einem ersten Kühlkanal (58) und einem von dem ersten Kühlkanal (58) verschiedenen zweiten Kühlkanal (60), wobei sich der erste Kühlkanal (58) und der zweite Kühlkanal (60) innerhalb des Blechpakets zwischen der ersten Stirnseite (54) und der zweiten Stirnseite (56) erstrecken,
mit zwei Lüfterrädern (10) nach einem der vorstehenden Ansprüche, die derart angeordnet und/oder ausgebildet sind, dass der Rotor (12) gegenläufig mit einem Kühlmedium durchströmbar ist.

11. Elektrische Maschine nach Anspruch 10, **dadurch gekennzeichnet, dass**
die erste Seite (18) des ersten Lüfterrads (10a) der ersten Stirnseite (54) des Rotors (12) zugewandt ist, die Ansaugöffnung (28) des ersten Lüfterrads (10a) mit dem ersten Kühlkanal (58) fluchtet, und
der Luftumlenkbereich (30) des ersten Lüfterrads (10a) mit dem zweiten Kühlkanal (60) fluchtet,
die erste Seite (18) des zweiten Lüfterrads (10b) der zweiten Stirnseite (56) des Rotors (12) zugewandt ist, die Ansaugöffnung (28) des zweiten Lüfterrads (10b) mit dem zweiten Kühlkanal (60) fluchtet, und der Luftumlenkbereich (30) des zweiten Lüfterrads (10b) mit dem ersten Kühlkanal (58) fluchtet.

12. Elektrische Maschine nach Anspruch 10 oder 11, **dadurch gekennzeichnet, dass** der Rotor (12) in Umfangsrichtung von einem Stator (34) umgeben ist, wobei der Rotor (12) relativ zum Stator (34) um dessen Längsachse (52) rotierbar angeordnet und/oder ausgebildet ist, Rotor (12) und Stator (34) von einem Gehäuse (62) umgeben sind, in dem Gehäuse (62) ein loslagerseitiger Hohlraum (64) und ein festlagerseitiger Hohlraum (66) ausgebildet sind, die durch Rotor (12) und Stator (34) voneinander getrennt sind, der Rotor (12) mit einem Kühlmedium, das zwischen dem loslagerseitigen Hohlraum (64) und dem festlagerseitigen Hohlraum (66) strömt, gegenläufig durchströmbar ist, durch eine Rotation des Rotors (12) um dessen Längsachse (52) im loslagerseitigen Hohlraum (64) ein erster Volumenstrom (V1) und im festlagerseitigen Hohlraum (66) ein zweiter Volumenstrom (V2) ausgebildet sind,
- ein erster Teil ( V2a) des zweiten Volumenstroms (V2) durch die ersten Lüfterradschaufeln (36) des ersten Lüfterrads (10a) über die Ansaugöffnung (28) des zweiten Lüfterrads (10b) ansaugbar ist, durch den zweiten Kühlkanal (60) führbar ist, und über den Luftumlenkbereich (30) des ersten Lüfterrads (10a) in radialer Richtung des Rotors (12) ausblasbar ist, um einen Wickelkopf (32) des den Rotor (12) in dessen Umfangsrichtung umgebenden Stators (34) im loslagerseitigen Hohlraum (64) zu kühlen,
- ein zweiter Teil (V2b) des zweiten Luftstroms (V2) über die zweiten Lüfterradschaufeln (50) des zweiten Lüfterrads (10b) in radialer Richtung des Grundkörpers (16) umlenkbar ist, um einen Wickelkopf (32) des Stators (34) im festlagerseitigen Hohlraum (66) zu kühlen,
- ein erster Teil (V1a) des ersten Volumenstroms (V1) durch die ersten Lüfterradschaufeln (36) des zweiten Lüfterrads (10b) über die Ansaugöffnung (28) des ersten Lüfterrads (10a) ansaugbar ist, durch den ersten Kühlkanal (58) führbar ist, und über den Luftumlenkbereich (30) des zweiten Lüfterrads (10b) in radialer Richtung des Rotors (12) ausblasbar ist, um den Wickelkopf (32) des Stators (34) im festlagerseitigen Hohlraum (66) zu kühlen,
- ein zweiter Teil (V1b) des ersten Volumenstroms (V1) über die zweiten Lüfterradschaufeln (50) des ersten Lüfterrads (10a) in radialer Richtung des Grundkörpers (16) umlenkbar ist, um den Wickelkopf (32) des Stators (34) im loslagerseitigen Hohlraum (64) zu kühlen.

13. Elektrische Maschine nach Anspruch 10 oder 12, **dadurch gekennzeichnet, dass** das Gehäuse (62) ein flüssigkeitsgekühltes loslagerseitiges Lagerschild (68) und/oder ein flüssigkeitsgekühltes festlagerseitiges Lagerschild (70) aufweist, und der erste Volumenstrom (V1) zumindest abschnittsweise an dem loslagerseitigen Lagerschild (68) vorbeiführbar ist, und der zweite Volumenstrom (V2) zumindest abschnittsweise an dem festlagerseitigen Lagerschild (70) vorbeiführbar ist.

14. Elektrische Maschine nach Anspruch 13, **dadurch gekennzeichnet, dass** eine dem Rotor (12) zugewandte Innenseite (72, 74) des loslagerseitigen Lagerschilds (68) und/oder des festlagerseitigen Lagerschilds (70) zumindest abschnittsweise konisch ausgebildet ist, so die jeweilige Innenseite in Richtung des Rotors (12) zulaufend ausgebildet ist.

## Claims

1. An impeller wheel (10) for an electric machine (14) of a motor vehicle, having a ring-shaped main body (16) having at least one intake opening (28) and an air deflection region (30) formed next to the intake opening (28) in the circumferential direction of the main body (16), wherein
the ring-shaped main body (16) has a first side (18) and a second side (20) spaced apart from the first side (18) in the axial direction of the main body (16),
a plurality of first impeller wheel blades (36) are arranged spaced apart from one another in the circumferential direction of the main body (16) on the first side (18), and
a plurality of second impeller wheel blades (50) are arranged spaced apart from one another in the circumferential direction of the main body (16) on the second side (20), **characterised in that** a second inner section (44), a second outer section (46) and a second central section (48) arranged between the second inner section (44) and the second outer section (46) are formed on the second side (20),
each section (44, 46, 48) is formed so as to extend circumferentially,
the second impeller wheel blades (50) are arranged in the second outer section (46), and
the intake opening (28) is formed in the second inner section (44).

2. The impeller wheel according to claim 1, **characterised in that** the main body (16) has, on the first side (18), a first inner section (22), a first outer section (24) and a first central section (26) arranged between the first inner section (22) and the first outer section (24),
each section (22, 24, 26) is formed so as to extend circumferentially,
the first impeller wheel blades (36) are arranged in the first outer section (24), and
the intake opening (28) and the air deflection region (30) are formed in the first inner section (22).

3. The impeller wheel according to any one of the preceding claims, **characterised in that** the second central section (48) is designed to be recessed in the axial direction of the main body (16) relative to the second outer section (46).

4. The impeller wheel according to any one of the preceding claims, **characterised in that** the first impeller wheel blades (36) and/or the second impeller wheel blades (50) are designed differently from one another.

5. The impeller wheel according to any one of the preceding claims, **characterised in that** the first impeller wheel blades (36) have a curved and/or an arc-shaped profile.

6. The impeller wheel according to any one of the preceding claims, **characterised in that** the second impeller wheel blades (50) have a straight design in the radial direction of the main body (16).

7. The impeller wheel according to any one of the preceding claims, **characterised in that** the impeller wheel (10) is formed in one piece.

8. The impeller wheel according to any one of the preceding claims, **characterised in that** the impeller wheel (10) is made of a metal, a plastic and/or a fibre-reinforced plastic.

9. The impeller wheel according to any one of the preceding claims, **characterised in that** the impeller wheel (10) has a plurality of intake openings (28) arranged spaced apart from one another in the circumferential direction, wherein the air deflection region (30) is formed between the intake openings (28).

10. An electric machine (14) for a motor vehicle, having
a rotor (12) rotatable about a rotor axis (52), which rotor has a laminated core with a first end face (54) and a second end face (56) spaced apart in the axial direction of the rotor (12),
a first cooling channel (58) and a second cooling channel (60) different from the first cooling channel (58), wherein the first cooling channel (58) and the second cooling channel (60) extend within the laminated core between the first end face (54) and the second end face (56),
having two impeller wheels (10) according to any one of the preceding claims, which are arranged and/or designed such that a cooling medium can flow through the rotor (12) in the opposite direction.

11. The electric machine according to claim 10, **characterised in that**
the first side (18) of the first impeller wheel (10a) faces the first end face (54) of the rotor (12), the intake opening (28) of the first impeller wheel (10a) is aligned with the first cooling channel (58), and
the air deflection region (30) of the first impeller wheel (10a) is aligned with the second cooling channel (60),
the first side (18) of the second impeller wheel (10b) faces the second end face (56) of the rotor (12), the intake opening (28) of the second impeller wheel (10b) is aligned with the second cooling channel (60), and the air deflection region (30) of the second impeller wheel (10b) is aligned with the first cooling channel (58).

12. An electric machine according to claim 10 or 11, **characterised in that** the rotor (12) is surrounded by a stator (34) in the circumferential direction, wherein the rotor (12) is arranged and/or designed to rotate relative to the stator (34) about its longitudinal axis (52), the rotor (12) and stator (34) are surrounded by a housing (62), a floating-bearing-side cavity (64) and a fixed-bearing-side cavity (66) are formed in the housing (62), which cavities are separated from one another by the rotor (12) and stator (34), a cooling medium flowing between the floating-bearing-side cavity (64) and the fixed-bearing-side cavity (66) can flow through the rotor (12) in opposite directions, a first volume flow (V1) is formed in the floating-bearing-side cavity (64) and a second volume flow (V2) is formed in the fixed-bearing-side cavity (66) by rotating the rotor (12) about its longitudinal axis (52),
- a first part (V2a) of the second volume flow (V2) can be drawn in through the first impeller wheel blades (36) of the first impeller wheel (10a) via the intake opening (28) of the second impeller wheel (10b), can be guided through the second cooling channel (60), and can be blown out in the radial direction of the rotor (12) via the air deflection region (30) of the first impeller wheel (10a) in order to cool a winding head (32) of the stator (34) surrounding the rotor (12) in its circumferential direction in the floating-bearing-side cavity (64),
- a second part (V2b) of the second air flow (V2) can be deflected in the radial direction of the main body (16) over the second impeller wheel blades (50) of the second impeller wheel (10b) to cool a winding head (32) of the stator (34) in the fixed-bearing-side cavity (66),
- a first part (V1a) of the first volume flow (V1) can be drawn in through the first impeller wheel blades (36) of the second impeller wheel (10b) via the intake opening (28) of the first impeller wheel (10a), can be guided through the first cooling channel (58), and can be blown out in the radial direction of the rotor (12) via the air deflection region (30) of the second impeller wheel (10b) in order to cool the winding head (32) of the stator (34) in the fixed-bearing-side cavity (66),
- a second part (V1b) of the first volume flow (V1) can be deflected in the radial direction of the main body (16) via the second impeller wheel blades (50) of the first impeller wheel (10a) in order to cool the winding head (32) of the stator (34) in the floating-bearing-side cavity (64).

13. The electric machine according to claim 10 or 12, **characterised in that** the housing (62) has a liquid-cooled floating-bearing-side bearing shield (68) and/or a liquid-cooled fixed-bearing-side bearing shield (70), and the first volume flow (V1) can be guided past the floating-bearing-side bearing shield (68) at least in sections, and the second volume flow (V2) can be guided past the fixed-bearing-side bearing shield (70) at least in sections.

14. The electric machine according to claim 13, **characterised in that** an inner side (72, 74) facing the rotor (12) of the floating-bearing-side bearing shield (68) and/or the fixed-bearing-side bearing shield (70) is at least partially conical, such that the respective inner side is tapered towards the rotor (12).

## Revendications

1. Roue à aubes (10) pour une machine électrique (14) d'un véhicule automobile, comportant
un corps de base (16) réalisé sous forme annulaire, qui présente au moins une ouverture d'admission (28) et une zone de déviation d'air (30) qui est réalisée dans la direction circonférentielle du corps de base (16) à proximité de l'ouverture d'admission (28), dans laquelle
le corps de base (16) réalisé sous forme annulaire présente un premier côté (18) et un second côté (20) réalisé à distance du premier côté (18) dans la direction axiale du corps de base (16), sur le premier côté (18), une pluralité de premières pales (36) de roue à aubes sont agencées à distance les unes des autres dans la direction circonférentielle du corps de base (16), et
sur le second côté (20), une pluralité de secondes pales (50) de roue à aubes sont agencées à distance les unes des autres dans la direction circonférentielle du corps de base (16),
**caractérisée en ce que**
sur le second côté (20), une seconde section interne (44), une seconde section externe (46) et une seconde section centrale (48) agencée entre la seconde section interne (44) et la seconde section externe (46) sont réalisées,
la section (44, 46, 48) respective est réalisée de manière à s'étendre dans la direction circonférentielle,
les secondes pales (50) de roue à aubes sont agencées dans la seconde section externe (46), et l'ouverture d'admission (28) est réalisée dans la seconde section interne (44).

2. Roue à aubes selon la revendication 1, **caractérisée en ce que** le corps de base (16) présente sur le premier côté (18) une première section interne (22), une première section externe (24) et une première section centrale (26) agencée entre la première section interne (22) et la première section externe (24),
la section (22, 24, 26) respective est réalisée de manière à s'étendre dans la direction circonférentielle,
les premières pales (36) de roue à aubes sont agencées dans la première section externe (24), et l'ouverture d'admission (28) et la zone de déviation d'air (30) sont réalisées dans la première section interne (22).

3. Roue à aubes selon l'une quelconque des revendications précédentes, **caractérisée en ce que** la seconde section centrale (48) est réalisée pour être en retrait dans la direction axiale du corps de base (16) par rapport à la seconde section externe (46).

4. Roue à aubes selon l'une quelconque des revendications précédentes, **caractérisée en ce que** les premières pales (36) de roue à aubes et/ou les secondes pales (50) de roue à aubes sont réalisées différemment les unes des autres.

5. Roue à aubes selon l'une quelconque des revendications précédentes, **caractérisée en ce que** les premières pales (36) de roue à aubes présentent un profil incurvé et/ou en forme d'arc.

6. Roue à aubes selon l'une quelconque des revendications précédentes, **caractérisée en ce que** les secondes pales (50) de roue à aubes présentent une conception linéaire dans la direction radiale du corps de base (16).

7. Roue à aubes selon l'une quelconque des revendications précédentes, **caractérisée en ce que** la roue à aubes (10) est réalisée d'une seule pièce.

8. Roue à aubes selon l'une quelconque des revendications précédentes, **caractérisée en ce que** la roue à aubes (10) est réalisée à partir d'un métal, d'un plastique et/ou à partir d'un plastique renforcé de fibres.

9. Roue à aubes selon l'une quelconque des revendications précédentes, **caractérisée en ce que** la roue à aubes (10) présente une pluralité d'ouvertures d'admission (28) agencées à distance les unes des autres dans la direction circonférentielle, dans laquelle la zone de déviation d'air (30) est réalisée entre les ouvertures d'admission (28).

10. Machine électrique (14) pour véhicule automobile, comportant
un rotor (12) pouvant tourner autour d'un axe de rotor (52), qui présente un noyau feuilleté comportant un premier côté frontal (54) et un second côté frontal (56) agencé à distance dans la direction axiale du rotor (12),
un premier canal de refroidissement (58) et un second canal de refroidissement (60) différent du premier canal de refroidissement (58), le premier canal de refroidissement (58) et le second canal de refroidissement (60) s'étendant à l'intérieur du noyau feuilleté entre le premier côté frontal (54) et le second côté frontal (56),
comportant deux roues à aubes (10) selon l'une quelconque des revendications précédentes, qui sont agencées et/ou réalisées de telle sorte que le rotor (12) peut être traversé par un fluide de refroidissement à contre-courant.

11. Machine électrique selon la revendication 10, **caractérisée en ce que**
le premier côté (18) de la première roue à aubes (10a) fait face au premier côté frontal (54) du rotor (12), l'ouverture d'admission (28) de la première roue à aubes (10a) est alignée avec le premier canal de refroidissement (58), et
la zone de déviation d'air (30) de la première roue à aubes (10a) est alignée avec le second canal de refroidissement (60),
le premier côté (18) de la seconde roue à aubes (10b) fait face au second côté frontal (56) du rotor (12), l'ouverture d'admission (28) de la seconde roue à aubes (10b) est alignée avec le second canal de refroidissement (60), et la zone de déviation d'air (30) de la seconde roue à aubes (10b) est alignée avec le premier canal de refroidissement (58).

12. Machine électrique selon la revendication 10 ou 11, **caractérisée en ce que** le rotor (12) est entouré dans la direction circonférentielle par un stator (34), le rotor (12) étant agencé et/ou réalisé pour pouvoir tourner par rapport au stator (34) autour de son axe longitudinal (52), le rotor (12) et le stator (34) sont entourés par un boîtier (62), dans le boîtier (62) sont réalisés une cavité (64) côté palier libre et une cavité (66) côté palier fixe, qui sont séparées l'une de l'autre par le rotor (12) et le stator (34), le rotor (12) peut être traversé par un fluide de refroidissement qui circule à contre-courant entre la cavité (64) côté palier libre et la cavité (66) côté palier fixe, une rotation du rotor (12) autour de son axe longitudinal (52) génère un premier débit volumique (V1) dans la cavité (64) côté palier libre et un second débit volumique (V2) dans la cavité (66) côté palier fixe,
- une première partie (V2a) du second débit volumique (V2) peut être aspirée à travers les premières pales (36) de roue à aubes de la première roue à aubes (10a) par l'intermédiaire de l'ouverture d'admission (28) de la seconde roue à aubes (10b), peut être guidée à travers le second canal de refroidissement (60) et peut être soufflée dans la direction radiale du rotor (12) par l'intermédiaire de la zone de déviation d'air (30) de la première roue à aubes (10a) afin de refroidir une tête d'enroulement (32) du stator (34) entourant le rotor (12) dans sa direction circonférentielle dans la cavité (64) côté palier libre,
- une seconde partie (V2b) du second débit d'air (V2) peut être déviée dans une direction radiale du corps de base (16) par l'intermédiaire des secondes pales (50) de roue à aubes de la seconde roue à aubes (10b) afin de refroidir une tête d'enroulement (32) du stator (34) dans la cavité (66) côté palier fixe,
- une première partie (V1a) du premier débit volumique (V1) peut être aspirée à travers les premières pales (36) de roue à aubes de la seconde roue à aubes (10b) par l'intermédiaire de l'ouverture d'admission (28) de la première roue à aubes (10a), peut être guidée à travers le premier canal de refroidissement (58) et peut être soufflée dans la direction radiale du rotor (12) par l'intermédiaire de la zone de déviation d'air (30) de la seconde roue à aubes (10b) afin de refroidir la tête d'enroulement (32) du stator (34) dans la cavité (66) côté palier fixe,
- une seconde partie (V1b) du premier débit volumique (V1) peut être déviée dans une direction radiale du corps de base (16) par l'intermédiaire des secondes pales (50) de roue à aubes de la première roue à aubes (10a) afin de refroidir la tête d'enroulement (32) du stator (34) dans la cavité (64) côté palier libre.

13. Machine électrique selon la revendication 10 ou 12, **caractérisée en ce que** le boîtier (62) présente un flasque de palier (68) côté palier libre refroidi par liquide et/ou un flasque de palier (70) côté palier fixe refroidi par liquide, et le premier débit volumique (VI) peut être guidé, au moins par sections, devant le flasque de palier (68) côté palier libre, et le seconde débit volumique (V2) peut être guidé, au moins par sections, devant le flasque de palier (70) côté palier fixe.

14. Machine électrique selon la revendication 13, **caractérisée en ce qu'**un côté interne (72, 74) faisant face au rotor (12) du flasque de palier (68) côté palier libre et/ou du flasque de palier (70) côté palier fixe est réalisé, au moins par sections, de manière conique, de telle sorte que le côté interne respectif est réalisé en continu dans la direction du rotor (12).
